# EUROPEAN PATENT APPLICATION

(11) **EP 3 702 972 A1**
(43) Date of publication of application: **02.09.2020**
(21) Application number: 20154778.3
(22) Date of filing: 31.01.2020
(51) Int. Cl.: G06N 3/04, G06N 3/08, G06Q 30/02

(54) **ARTIFICIAL INTELLIGENCE GENERATION OF MEDIA**

(30) Priority: 26.02.2019 US 201916286523
(71) Applicant: SoundHound, Inc., Santa Clara, CA 95054 (US)
(72) Inventor: Probell, Jonah, Santa Clara, CA 95054 (US)
(74) Representative: Smith, Jeremy Robert

(57) **Abstract**

In a generative adversarial neural network (GAN) system, a trained automatic ad generator generates ads based on product information, consumer profile, and presentation context. Ads can be vectors. Ad presentations generate metadata vectors. An effective ad discriminator is trained on ad a presentation vectors labeled by the results of ad presentations. Large numbers of ads, never presented, are generated and labeled by the effective ad discriminator and a product information decoder as positive or/and negative training example corpora. The training corpora retrain or train a new ad generator.

## Description

### FIELD OF THE INVENTION

The present invention is in the field of artificial intelligence and its application to generation of advertisements.

### BACKGROUND

The disclosed invention is easiest understood in the context of research on generative adversarial networks (GAN) and methods of optimization of ad engagement. The following are some examples of relevant prior research.

Ahmed Elgammal et al. published "CAN: Creative Adversarial Networks Generating "Art" by Learning About Styles and Deviating from Style Norms" (arXiv:1706.07068v1 [cs.AI] 21 Jun 2017). The paper describes a method of randomly generating visual art in the style of human artists.

Wei Ren Tan et al. published "ArtGAN: Artwork Synthesis with Conditional Categorical GANs" (arXiv:1702.03410v2 [cs.CV] 19 Apr 2017). The paper takes a somewhat different approach to achieving comparable results in terms of generating visual art.

Yichi Ma et al. published "A Novel Approach to Artistic Textual Visualization via GAN" (arXiv:1710.10553v1 [cs.CV] 29 Oct 2017). The paper describes a method of generating images corresponding to textual input.

Christopher Thomas et al. published "Persuasive Faces: Generating Faces in Advertisements" (arXiv:1807.09882v1 [cs.CV] 25 Jul 2018). The paper describes a method of generating images of faces corresponding to types of products in advertisements.

Ke Wang et al. published "SentiGAN: Generating Sentimental Texts via Mixture Adversarial Networks" (Proceedings of the Twenty-Seventh International Joint Conference on Artificial Intelligence (UCAI-18) pages 4446-4452). The paper describes a method of generating text having specific target sentiments.

Yue Deng et al. published "Disguise Adversarial Networks for Click-through Rate Prediction" (Proceedings of the Twenty-Sixth International Joint Conference on Artificial Intelligence (IJCAI-17) pages 1589-1595). The paper describes a method of predicting click-through rates for advertisements.

US patent publication US7333967B1 to Selmer Conrad Bringsjord et al. describes a method of computer creativity.

US patent application publication US20070112840A1 to Chad Carson et al. describes a method for predicting ad click-through rates.

China patent application publication CN106682927A to 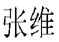 describes a method for generating styles of advertisements.

China patent application publication CN105976203A to 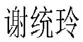 et al. describes a method of automatic generation of ads according using templates.

China patent application publication CN108090041A to 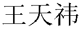 describes a method for using historically successful ads to guide writing of new ads.

### SUMMARY OF THE INVENTION

Embodiments of the present invention use a generator module that uses product information to generate ads. Some generators also use consumer profile information to generate appropriate ads.

Embodiments of the present invention present ads to consumers, measure the effectiveness of the ads, and label the presented ads as either effective or ineffective. Some embodiments use the labeled ads to train or retrain an effective ad discriminator.

Embodiments of the present invention use an effective ad discriminator to predict the effectiveness of generated ads and label generated ads as either positive or not. Some embodiments also label some ads as negative examples for training. Some embodiments use the labeled examples to train or retrain an ad generator.

Some embodiments of the present invention include a product information decoder that compares generated ads to information about the product that the ad promotes. This can avoid the ad generator learning to ignore most ranges of input values and generate just a small number of ads that the discriminator labels as effective. Some embodiments use the results of the product information decoding to affect the labeling of positive and negative example ads.

Various embodiments of the present invention produce ads that are audible, musical, spoken, graphic, textual, animated, and physically moving.

Embodiments of the present invention describe a system for applying artificial intelligence to enhance the effectiveness of media, the system comprising a discriminator trained on previously generated media labeled in accordance with a measured effectiveness, wherein the previously generated media was presented to users and user engagement with the previously generated media was measured, an information decoder configured to consume newly generated media and information describing the newly generated media, decode a description of the newly generated media, and compare the decoded description to the consumed input information to produce a label for the previously generated media, a generator configured to generate the newly generated media according to input information describing the newly generated media, the generator being trained on labeled previously generated media for which decoded information corresponds to input information.

The training may use backpropagation of probability estimates from the discriminator.

The generated media may be one or more of audible, spoken, graphic, textual, animated, and physically moving media.

User engagement may be measured by clicking. User engagement may be measured by receiving, at a natural language processor, a user natural language expression from the user interpreted as expressing interest.

The information may comprise user profile information.

Embodiments of the present invention describe computer-implemented method of applying artificial intelligence to enhance the effectiveness of media, the method comprising labeling, by a discriminator trained on previously generated media, the previously generated media in accordance with a measured effectiveness, wherein the previously generated media was presented to users and user engagement with the previously generated media was measured, consuming, at an information decoder, newly generated media and information describing the newly generated media, decoding, by the information decoder, a description of the newly generated media, comparing, by the information decoder, the decoded description to the consumed information to produce a label for the newly generated media, and generating newly generated media, according to the information describing the media, using a generator, wherein the generator is trained on labeled media for which decoded information corresponds to input information.

The training may use backpropagation of probability estimates from the discriminator.

The generated media may be one or more of audible, spoken, graphic, textual, animated, and physically moving media.

User engagement may be measured by clicking. User engagement may be measured by received a user natural language expression interpreted, by a natural language processor, as expressing interest.

The information may comprise user profile information.

Various embodiments use servers and clients connected through networks, computer-readable media, systems-on-chip, and various devices with human interface.

### BRIEF DESCRIPTION OF THE DRAWINGS

FIG. 1 shows an overview of a system and the steps of its operation according to an embodiment.
FIG. 2 shows a mobile handset displaying a generated visual ad according to an embodiment.
FIG. 3 shows an engagement by a consumer with an audio ad according to an embodiment.
FIG. 4 illustrates an ad data structure according to an embodiment.
FIG. 5 illustrates a data structure of metadata corresponding to an ad according to an embodiment.
FIG. 6 illustrates system components and method steps for training an effective ad discriminator according to an embodiment.
FIG. 7 illustrates system components and method steps for training an ad generator according to an embodiment.
FIG. 8 illustrates a network-based system for delivering ads to a consumer according to an embodiment.
FIG. 9A shows a rotating disk non-transitory computer-readable medium according to an embodiment.
FIG. 9B shows a solid-state memory chip package non-transitory computer-readable medium according to an embodiment.
FIG. 10A shows the solder ball side of a packaged system-on-chip according to an embodiment.
FIG. 10B shows a block diagram of the functions within a system-on-chip according to an embodiment.
FIG. 11A shows a rack-based server system according to an embodiment.
FIG. 11B shows a block diagram of the functions within a server system according to an embodiment.

### DETAILED DESCRIPTION

The following describes various embodiments of the present invention that illustrate various interesting features. Generally, embodiments can use the described features in any combination.

In relation to advertising, this disclosure uses the term product to describe both products and services that might be advertised.

### System overview

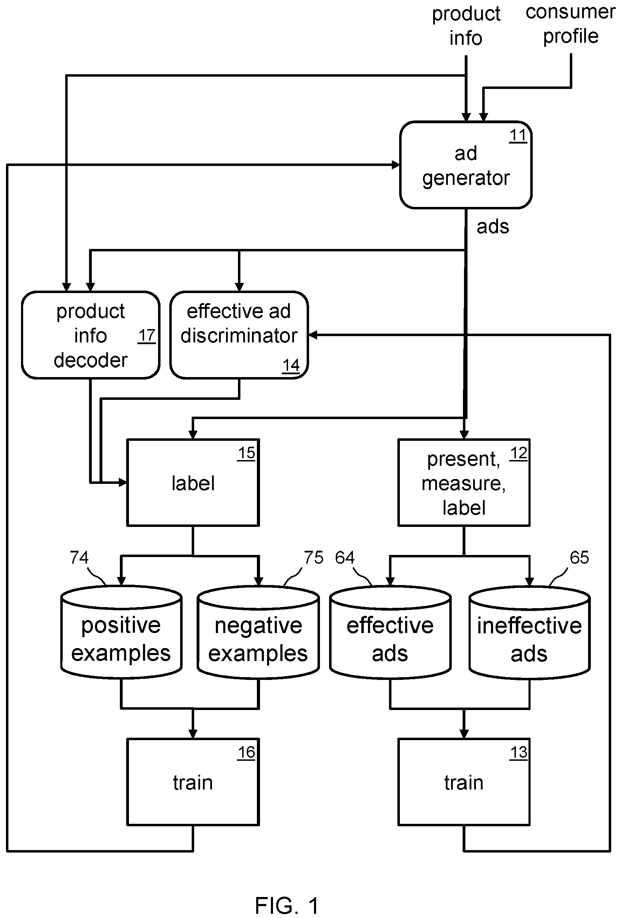

FIG. 1 shows an overview of system operation according to an embodiment. It comprises an ad generator 11 that takes as input a product information and generates as output ads. Some embodiments implement an ad generator using a neural network. However, any algorithm that converts product information to ads in a manner according to example-based training is appropriate.

Some embodiments of an ad generator 11 may also take consumer profile information, which affects the output to be specific to a consumer profile. Whereas ads based solely on product information are appropriate for billboards or other widely observed ads, an ad generator that uses consumer profile information creates ads specific to individual consumers, which, on personal devices such as mobile handsets, can be more effective than ads based on product information alone.

Some embodiments further comprise a step of presenting ads to one or more consumers, measuring the effectiveness of the ads, and labeling each ad as to its effectiveness 12. The embodiment of FIG. 1 identifies ads as either effective or ineffective and stores effective ads in an effective ads database 64 and ineffective ads in an ineffective ads database 65. Some embodiments store the ads in a single database but tag each ad as being effective or ineffective. This is useful such as for training a binary classifier model.

Some embodiments store ads in a database and associate a score with each ad, the score representing a non-Boolean value of its effectiveness. This is useful such as for training a regression model. Though not shown in FIG. 1, its implementation is readily apparent.

The embodiment shown in FIG. 1 performs a training step on the ads labeled as effective and ineffective 13. The training produces an effective ad discriminator model 14. The effective ad discriminator 14 takes an ad as input and produces an output indicating the estimated effectiveness of the ad. Some embodiments implement an effective ad discriminator using a neural network. However, any algorithm that takes in an ad and outputs a prediction of its effectiveness according to example-based training is appropriate. Some embodiments output a Boolean value for the effectiveness prediction. Some embodiments output a non-Boolean estimation of effectiveness.

In the embodiment shown in FIG. 1, a labeling step 15 uses the predicted effectiveness to send generated ads to a database of positive example ads 74 for ads predicted to be effective or to a database of negative example ads 75 for ads predicted to be ineffective. Some embodiments store the example ads in a single database but tag each ad as being effective or ineffective. This is useful such as for training a binary classifier model.

Some embodiments store example ads in a database and associate a score with each ad, the score representing a non-Boolean value of its effectiveness. This is useful such as for training a regression model. Though not shown in FIG. 1, its implementation is readily apparent.

The embodiment shown in FIG. 1 performs a training step 16 to train the ad generator 11. In some embodiments, training happens in batches, rerun at periods from 1 hour to several weeks. Some embodiments use a continuous retraining process. The training periods and algorithms may be different for the ad generator 11 and effective ad discriminator 14. While the presenting of ads, in order to collect effectiveness labeled data, is limited to a rate that consumers are able to observe the ads, ad generation for the purpose of creating positive and negative examples can occur much more frequently and can be useful to improve the effectiveness of the ad generator 11 without waiting for consumer impressions.

Some embodiments include consumer profile information with the ad labeling in both the presented ads databases and example ads databases.

The ad generator 11, effective ad discriminator 14, and the training process for each creates a feedback loop that, because of the step of measuring and labeling presented ads continuously improves its effectiveness.

### Product information decoder

A system with discriminator feedback training a generator and generated ads training a discriminator will tend to fall into a local extremum of generating the essentially the same ads regardless of the product information or consumer profile input. Because this is a local extremum, it is likely that it not the optimum ad for any given product or consumer profile. Furthermore, because people find stimulus attractive if it is surprising (to a moderate degree), generating essentially the same ads would render them as boring and therefore less effective.

One way to avoid boringness is by adding randomization at some point in the feedback system. Randomization without constraints will result in ads with interesting variations. However, the variations would be irrelevant to the products that they advertise. This would make the ads less effective than they could be.

Some embodiments include a product information decoder 17 that takes as input an ad produced by the ad generator 11 and the product information that was the input to generate the ad. Some embodiments of product information decoders 17 also take a consumer profile as input. The product information decoder extracts product information from ads and compares it to the source information that generated the ads. If the extracted information for an ad matches the source information for the ad, then the product information decoder labels the ad as acceptable. Some embodiments allow for imperfect matching and labeling with a degree of acceptability. In embodiments with a product information decoder 17, its acceptability output contributes to the example ad labelling function 15.

Some embodiments could have a product information decoder along the path of presentation, measuring, and labeling of ads 11. However, since the effective ad discriminator path is independent of presenting ads to consumers, it can run more frequently for faster training. Also, it is preferable not to present ads to consumers if the ads have a high probability of performing poorly or failing in a product information decoder.

Some embodiments train or contribute to the training of the product information decoder by using human data labelers. These can be specialists or non-specialist proxy consumers, such as in focus groups or other consumer research studies. Accordingly, labelers observe ads, observe product descriptions, and indicate whether or to what degree it is clear that the ad is for the described product. Similarly, for a product information decoder that uses consumer profile input, it would be useful to segregate human labeler by their consumer profiles.

### Humor

Some products or advertisers or ad campaigns succeed by using humor. It is possible to train a product information decoder by human labelers with humor as a desirable output feature. It is also possible to train on generated ads targeting an intentional mismatch between source product information and decoded product information. For example, if product information is related to shampoo for humans and the decoded product information is shampoo for non-human animals then the product information decoder labels the ad as successful.

One way to implement humor detection is to treat product information as an embedding and measure cosine distance between source product information and decoded product information. By using a threshold of maximum acceptable cosine distance for labeling an ad as a positive example, it is possible to allow humor that is recognizable as humor. Creating a threshold of minimum acceptable cosine distance for labeling an ad as a positive example ensures a certain degree of humor.

Another approach to creating acceptable humor is to mark only certain parameters of product information as ones appropriate for variation. A similar compatible approach is to create acceptable ranges or specific sets of allowable values of product information attributes.

### Ad structure

The embodiment of FIG. 1 and variations described above are applicable to generating ads with various application-appropriate types of elements. Some types of elements are audible, musical, spoken, graphic, textual, animated, and physically moving. These different types of elements are applicable to various human-machine interfaces that support presenting ads. Combinations of types of elements are appropriate for some interfaces. For example, a billboard near a road could have graphic and textual elements but not audible or musical elements. A radio ad could have musical and spoken elements but not graphic, textual, or animated elements.

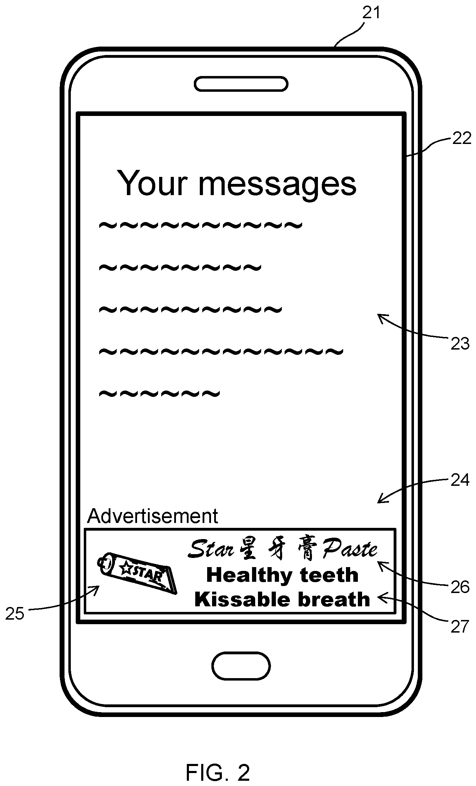

FIG. 2 shows a mobile handset embodiment 21 with a screen portion 22. The screen is useful to display apps such as an app for reading messages 23. The screen portion 22 further displays an ad 24. FIG. 2 shows an example of an ad for a toothpaste of a specific brand called Star Paste. The ad comprises a graphic element 25 that is a product photo. The ad also comprises a first textual element 26 that is the product name rendered with a particular font. For consistency of trademark usage, a product name and font might be better rendered as a graphic element. The ad further comprises a second textual element 27 that has poetic words to make the product seem appealing to consumers.

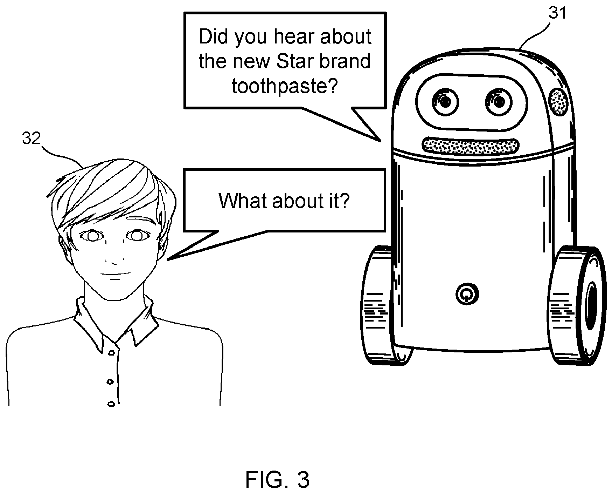

FIG. 3 shows a robot assistant embodiment 31. It interacts with a human master 32. The robot assistant is anthropomorphic. Accordingly, it provides ads with spoken elements. Whereas text has fonts, speech elements have text-to-speech (TTS) synthesis voice parameters.

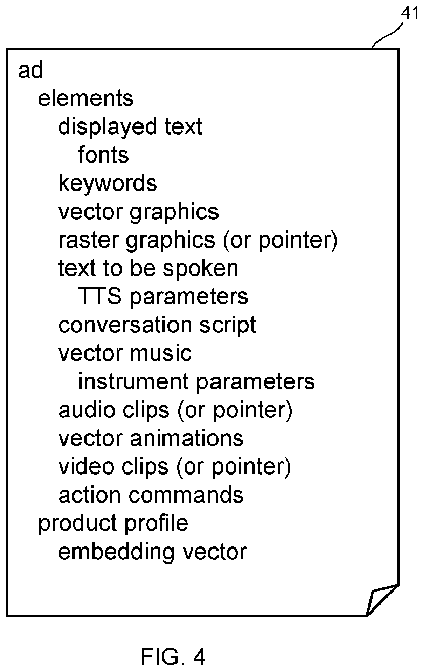

FIG. 4 shows an ad data structure within a computer file 41. The structure shown includes element types. It is possible for ads to have arrays of multiple instances of element types.

One type of element is displayed text. Such an element may have parameters such as font type, size, and style.

Another possible type of ad element are keywords. These can be useful for various purposes, including supporting conventional ad ecosystems that use keyword-based bidding or placement choosing.

Another type of element is vector graphics. This can include objects with sub parameters such as size, color, orientation, transparency, shading, patterns, etc. One example of a standard format for vector graphics is the Scalable Vector Graphics standard (SVG).

Another type of element is raster graphics. Ads generally require small amounts of data. They are, essentially, input vectors for presentation rendering and for a discriminator. Raster graphics, such as bitmaps or compressed bitmaps in formats such as Joint Picture Experts Group (JPEG) format usually comprise relatively large amounts of data. Some embodiments train discriminators on graphics. These operate like object recognition discriminators such as convolutional neural networks (CNNs). However, some embodiments keep ads small and strictly parameter-based. Such an approach reduces model sizes, which improves training speed, storage space, bandwidth, and other key criteria. To support such an embodiment and still support raster graphic elements, such embodiments use pointers to raster art files. The renderer for presenting ads to consumers uses the pointer to lookup and read the graphic element.

Another type of element is text for the presentation step to render as synthesized speech audio. Like text has fonts, speech has TTS parameters, which are parameters of spoken text elements.

Some ads, such as ones for robot assistants or speech-based virtual assistants comprise conversation script elements. These provide for conditional responses to the consumer's behavior. For example, a toothpaste ad can initiate a conversation with a question such as, "have you heard about the new Star brand toothpaste?" The ad can then direct the presentation interface to recognize words from a target consumer. If the words mention breath, the ad instructs a spoken response about fresh breath and if the words mention teeth, the ad instructs a spoken response about healthy teeth.

One type of ad element is vector music. As displayed text has fonts and speech has TTS parameters, vector music has instrument parameters. One standard format for vector music is the Musical Instrument Digital Interface (MIDI) standard.

One type of ad elements is audio clips. For the same reasons that raster graphics might be embedded or might be linked by a pointer, so, too, can audio clip elements. Audio clips are useful for musical segments such as product jingles or sound effects.

One type of ad element is vector animation. This is appropriate for human-machine interfaces with a visual component. One industry standard format for vector animations is Adobe Flash. Another standard is Hyper-Text Markup Language (HTML) 5.

One type of ad element is video clips. For the same reasons that raster graphics and audio clips might be embedded or might be linked by a pointer, so, too, can video clip elements. Video clips are useful for pixel-based moving visual segments.

One type of ad element is a set of one or more action command. This is appropriate for human-machine interfaces that move. For example, assistant robots that move objects around or anthropomorphic robots that nod their head or shrug their shoulders.

Some embodiments include product profiles within ads. This can support ad inventory management and sales and can provide criteria for ad selection algorithms. There are various ways to represent product profiles, depending on the application. One conceivable way is to use World Intellectual Property Organization (WIPO) trademark classification codes. One way is to use embedding vectors with dimensions corresponding to attributes of advertised products. System designers can define embedding space dimensions. It is also possible to define an embedding space using machine learning from correlations between product profiles and ad elements in ads found to be effective or ineffective.

Furthermore, include a product profile within an ad is one way to provide the source product to the product information decoder for comparison to decoded product information decoded from generated ad elements.

### Vectorizing

CNNs or equivalent models can be effective on elements with large amounts of data such as raster graphics, audio clips, or video clips. However, their training is much slower than training on relatively small purely vector-based (parametric) ad representations. As a result, vectorizing digitized elements can improve results. Some examples of vectorization are optical character recognition (OCR) to recognize text from raster graphics; object recognition to recognize semantically meaningful objects within raster graphics, video object recognition in video clips, music acoustic profiling from audio clips, and automatic speech recognition (ASR) to recognize words spoken in audio clips.

For systems that are purely parametric, vectorizing of content can be useful for training from successful historic ad campaigns such as classic ones from Coca-Cola, McDonalds, Nike, and Marlboro. Vectorizing is also useful for training on ads generated by incompatible systems.

### Effective ad discriminator

An effective ad discriminator is a model that estimates probabilities of ads being effective. It can use, for example, a classification or a regression algorithm. Various ways are possible to measure effectiveness of an ad. A simple way is to measure engagement such as a click-through rate for visual ads or query ("tell me more") rates for natural language conversational ads. A more accurate way to measure effectiveness is conversion rates. That considers whether the engagement caused a consumer to make a purchase. Ads can also be effective for changing feelings about products even if not causing a short-term measurable conversion. Another way of measuring effectiveness is to measure non-purchase behavior of consumers that indicates their feelings. Numerous measurable parameters can indicate ad effectiveness.

Not all consumers are the same. For any given ad, an effectiveness prediction is most accurately conditioned by consumer profile. For example, ads are usually most effective when they show people that have a similar age and race as the consumer. For another example, ads are most effective when they use words in a language that a consumer understands. Therefore, training an effective ad discriminator gives best accuracy when trained not only on the vectors of ads but vectors relating to the consumers on whom training data relies. Some example vectors are age, gender, race, home location, and income.

Furthermore, the effectiveness of ads depends on context. For example, ads containing food items are more effective at times of day when consumers are hungry. Ads with agricultural themes are more effective in rural locations. Ads with children are more effective when placed amid content having family-related words than amid content having business-related words.

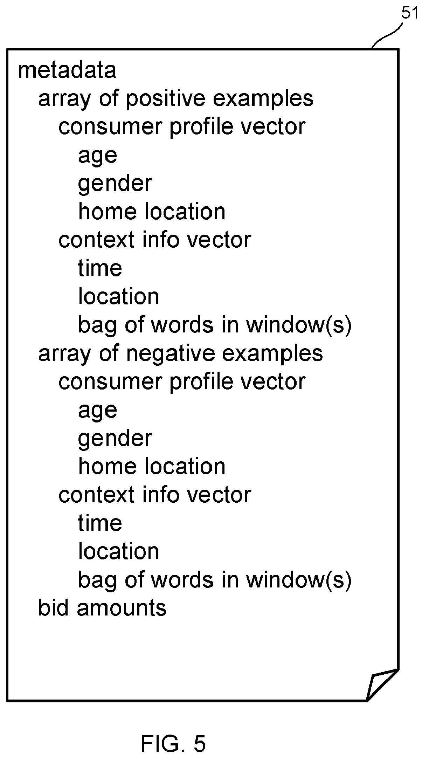

FIG. 5 shows an ad metadata structure within a computer file 51. The metadata corresponds to a single ad after presenting it a multiplicity of times. The metadata comprises arrays of metadata for positive examples representing presentations of the ad that were successful and a similar array of negative examples representing presentations of the ad that were unsuccessful. Each array comprises consumer profile vectors including values known for age, gender, and home location. Each array also comprises context information vectors including time and location of the ad presentation. The context information vectors also comprise an unordered set of recognized words spoken either to the consumer or by the consumer within a window of time before the ad presentation. Some embodiments use multiple windows of time.

Some embodiments also store a bid amount as metadata for each ad. This is an indicator of the value of the corresponding ad to the advertiser, which publishers can use to optimize training for maximizing ad publishing revenue.

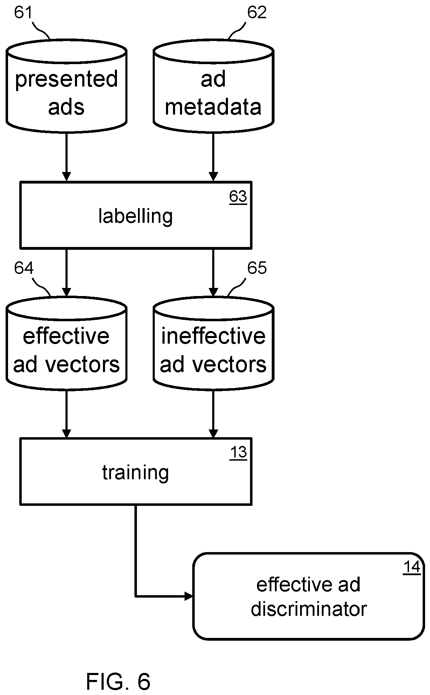

FIG. 6 shows an effective ad discriminator training process according to an embodiment. The method trains the discriminator on real ads and resulting consumer behavior. The ad presentation system presents ads from a database 61. From the presentation, the system compiles a database of metadata about successful and unsuccessful presentations of the ad 62. The system labels the ads 63 as either effective or ineffective and stores effective ones in a database 64 and ineffective ones in another database 65. The database comprises not just ad vectors, but a vector for each presentation of an ad. Each stored vector comprises both the vectors of a presented ad content and the metadata resulting from the presentation.

The system uses a model training process 13. Many methods of training models such as deep neural networks are well known. The training products an effective ad discriminator model 14.

Some systems present ad campaigns. Those are groups of ads that, cumulatively, serve to persuade consumers more effectively than repeated presentations of a single ad. For ad campaigns, a recurrent neural network would be appropriate, where the effectiveness model is dependent on previously presented or previously engaged ads.

One way to initially bring-up a system is to train on historical ads that are not ones that the system generated itself.

### Ad generator

Training an ad generator simply based on training from displayed ads would have at least two problems. One problem is that it would be slower than necessary since there is a limit to the rate at which a consumer can absorb ads. Another problem is that the system would present large numbers of ineffective ads while learning to present effective ones, and some ineffective ads, especially in large numbers, would be detrimental to their advertisers' brands. It is necessary to train an ad generator from large corpora of positive and negative example ads without presenting them to consumers.

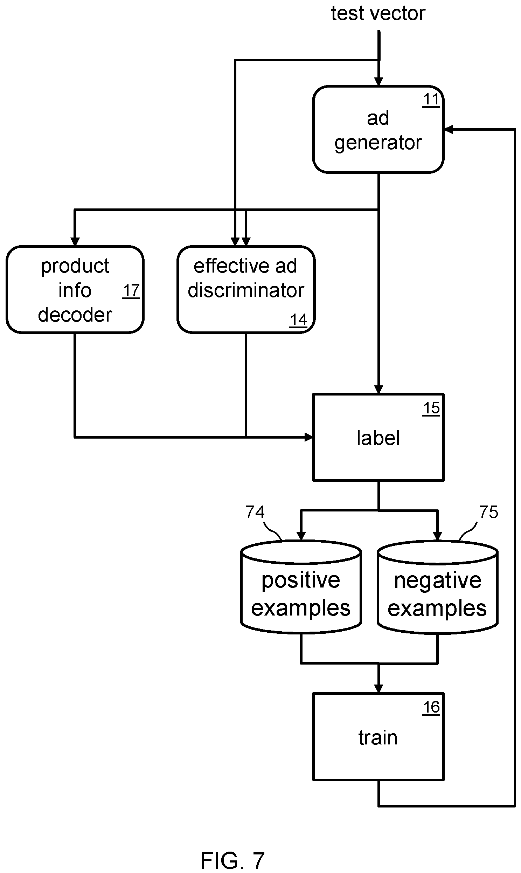

FIG. 7 shows a system process for doing so. An initially trained ad generator 11 takes in a test vector. The text vector comprises a product description and ad metadata such as a user profile vector and context vector. Ad generator 11 generates large numbers of ad vectors. For each on, an effective ad discriminator 14 and product information decoder 17 indicate the likely effectiveness of the ad and whether its product is discernable. A labeling step 15 uses those results to sort ads and their metadata vectors into databases of positive examples 74 and negative examples 75. In a training step 16, the system proceeds to retrain or train a new ad generator 11 to produce more effective ads.

With a well-trained effective ad discriminator 14, random test vectors of product descriptions, consumer profiles, and presentation contexts can yield a well-trained ad generator that can produce effective ads for a wide range of products across a wide range of consumers in a wide range of contexts. Test vectors can be created randomly or in a directed-random way to train for especially common or desirable products, consumers, or contexts. A well-trained system can instantaneously generate, for any product, an optimal ad for a given consumer in a given context.

### Personalization

In various embodiments, consumer profiles comprise information such as gender, age, ethnicity, current location, and location history.

A consumer profile can also comprise a word usage embedding vector that represents an average, mean, or other statistical representation of the cumulation of recognized words expressed by the consumer in an embedding space.

A consumer profile can comprise an array of such vectors organized in ways such as by time or by location or both.

### The cloud

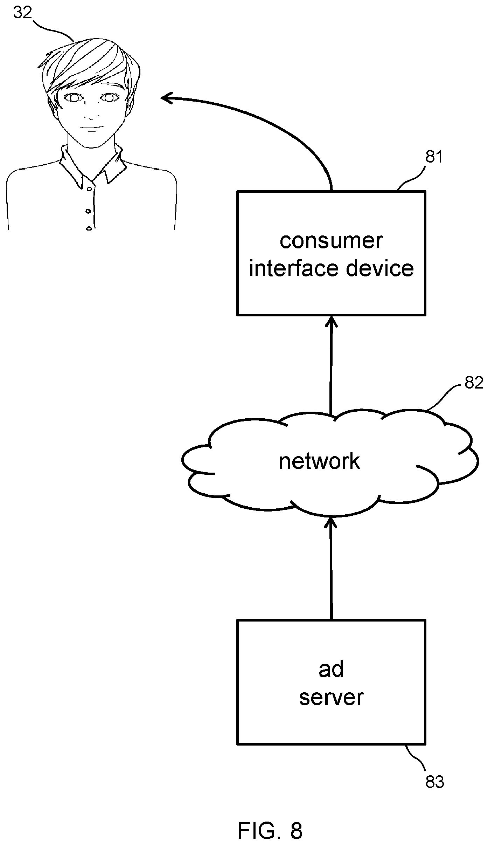

FIG. 8 shows a consumer 32 communicating with a human interface device 81 coupled, as a client, through a network 82 to an ad server 83 according to an embodiment. The ad server 83 communicates ads over network 82 to the client 81, which presents the ad to the consumer 32.

Some examples of a consumer interface device 81 are mobile phones, home music players, automobiles, billboards, personal computers, augmented reality glasses, robots, and avatars. Some examples of a network 82 are the Internet, a local area network (LAN), a Bluetooth connection, and a 5G mobile network. Some examples of an ad server 83 are servers in cloud data centers, subsystems built into vehicles, and subsystems of portable devices.

### CRMs

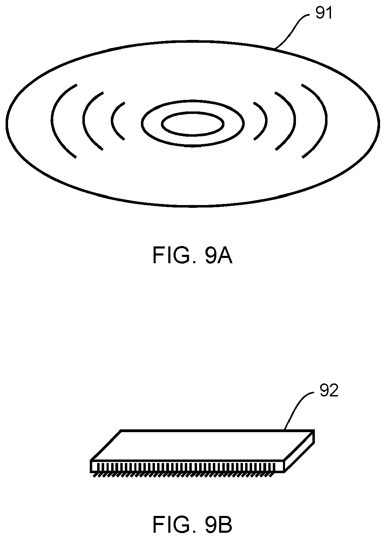

Figure 9A shows an example non-transitory computer readable medium 91 that is a rotating magnetic disk. Data centers commonly use magnetic disks to store data and code comprising instructions for server processors. Non-transitory computer readable medium 91 stores code comprising instructions that, if executed by one or more computers, would cause the computer to perform steps of methods described herein. Rotating optical disks and other mechanically moving storage media are possible.

Figure 9B shows an example non-transitory computer readable medium 92 that is a Flash random access memory (RAM) chip. Data centers commonly use Flash memory to store data and code for server processors. Mobile devices commonly use Flash memory to store data and code for processors within system-on-chip devices. Non-transitory computer readable medium 92 stores code comprising instructions that, if executed by one or more computers, would cause the computer to perform steps of methods described herein. Other non-moving storage media packaged with leads or solder balls are possible.

Any type of computer-readable medium is appropriate for storing code comprising instructions according to various embodiments.

### The SoC

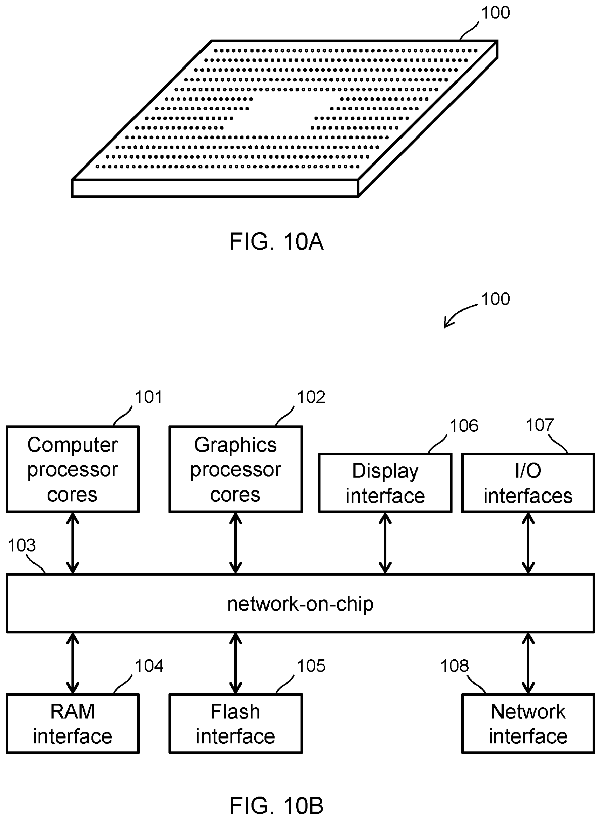

FIG. 10A shows the bottom side of a packaged system-on-chip device 100 with a ball grid array for surface-mount soldering to a printed circuit board. Various package shapes and sizes are possible for various chip implementations. System-on-chip (SoC) devices control many embedded systems and IoT device embodiments as described herein.

FIG. 10B shows a block diagram of the system-on-chip 100. It comprises a multicore cluster of computer processor (CPU) cores 101 and a multicore cluster of graphics processor (GPU) cores 102. The processors connect through a network-on-chip 103 to an off-chip dynamic random-access memory (DRAM) interface 104 for volatile program and data storage and a Flash interface 105 for non-volatile storage of computer program code in a Flash RAM non-transitory computer readable medium. SoC 100 also has a display interface 106 for displaying a graphical user interface (GUI) and an I/O interface module 107 for connecting to various I/O interface devices, as needed for different peripheral devices. The I/O interface enables sensors such as touch screen sensors, geolocation receivers, microphones, speakers, Bluetooth peripherals, and USB devices, such as keyboards and mice, among others. SoC 100 also comprises a network interface 108 to allow the processors to access the Internet through wired or wireless connections such as Wi-Fi, 3G, 4G long-term evolution (LTE), 5G, and other wireless interface standard radios as well as ethernet connection hardware. By executing instructions stored in RAM devices through interface 104 or Flash devices through interface 105, the CPUs 101 and GPUs 102 perform steps of methods as described herein.

### The server

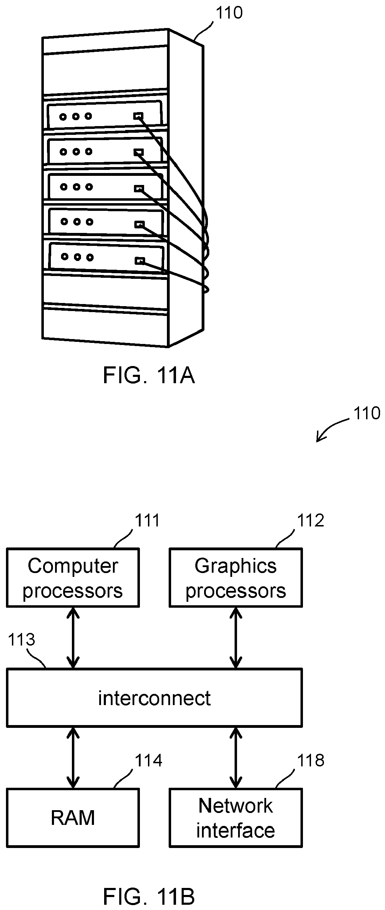

FIG. 11A shows a rack-mounted server blade multi-processor server system 110 according to some embodiments. It comprises a multiplicity of network-connected computer processors that run software in parallel.

FIG. 11B shows a block diagram of the server system 110. It comprises a multicore cluster of computer processor (CPU) cores 111 and a multicore cluster of graphics processor (GPU) cores 112. The processors connect through a board-level interconnect 113 to random-access memory (RAM) devices 114 for program code and data storage. Server system 110 also comprises a network interface 118 to allow the processors to access the Internet. By executing instructions stored in RAM devices through interface 114, the CPUs 111 and GPUs 112 perform steps of methods as described herein.

### General boilerplate

Practitioners skilled in the art will recognize many modifications and variations. The modifications and variations include any relevant combination of the disclosed features.

Various embodiments are methods that use the behavior of either or a combination of humans and machines. Method embodiments are complete wherever in the world most constituent steps occur. Some embodiments are one or more non-transitory computer readable media arranged to store such instructions for methods described herein. Whatever machine holds non-transitory computer readable media comprising any of the necessary code holds a complete embodiment. Some embodiments are physical devices such as semiconductor chips; hardware description language representations of the logical or functional behavior of such devices; and one or more non-transitory computer readable media arranged to store such hardware description language representations.

Descriptions herein reciting principles, features, and embodiments encompass both structural and functional equivalents thereof. Elements described herein as coupled have an effectual relationship realizable by a direct connection or indirectly with one or more other intervening elements.

Examples shown and described use certain spoken languages. Various embodiments operate, similarly, for other languages or combinations of languages. Examples shown and described use certain domains of knowledge. Various embodiments operate similarly for other domains or combinations of domains.

Some embodiments are screenless, such as an earpiece, which has no display screen. Some embodiments are stationary, such as a vending machine. Some embodiments are mobile, such as an automobile. Some embodiments are portable, such as a mobile phone. Some embodiments comprise manual interfaces such as keyboard or touch screens. Some embodiments comprise neural interfaces that use human thoughts as a form of natural language expression.

The disclosure comprises the following items:
1. A system for applying artificial intelligence to optimize the effectiveness of ads, the system comprising:
   an effective ad discriminator that consumes generated ads and labels them as to whether they are effective, the effective ad discriminator being trained on engagement data labeled by effectiveness;
   a product information decoder that consumes generated ads and decodes product information in the ads;
   an ad generator that consumes product information and generates ads, the ad generator being trained on labeled example ads for which decoded product information corresponds to input product information.
2. The system of item 1 wherein engagement data is previously generated ads and engagement success is measured by consumer engagement with each previously generated ad.
3. The system of item 1 wherein the ads are visual images.
4. The system of item 1 wherein engagement is by clicking.
5. The system of item 1 wherein the ads are generated audio.
6. The system of item 1 wherein engagement is by a natural language expression interpreted as expressing interest.
7. An ad generating adversarial neural network system comprising:
   a conditional generator neural network that generates ads conditioned on ad product information and consumer profile information;
   a product information decoder function that consumes ads and decodes ad product information; and
   an effective ad discriminator neural network, trained on ads labeled as effective, that consumes generated ads and produces a prediction of their effectiveness,
   wherein the ad generator is trained on ads for which decoded product information corresponds to ad product information, the training using backpropagation of probability estimates from the effective ad discriminator.
8. The system of item 7 wherein the ads are visual images.
9. The system of item 7 wherein engagement is by clicking.
10. The system of item 7 wherein the ads are generated audio.
11. The system of item 7 wherein engagement is by a natural language expression interpreted as expressing interest.
12. A method of applying artificial intelligence to optimize the effectiveness of ads, the method comprising:
   generating ads from product information input using an ad generator;
   presenting the ads to consumers;
   measuring the effectiveness of the presented ads; and
   labeling the presented ads according to their effectiveness,
   wherein the ad generator is trained on previously generated ads labeled as positive examples by an effective ad discriminator, the effective ad discriminator having been trained on prior labeled presented ads.
13. The method of item 12 wherein the ad generator constrains the generated ads according to consumer profile input.
14. The method of item 12 wherein the labeling of positive examples is conditional upon success decoding product information from the previously generated ads.
15. The method of item 12 wherein the ads are visual images.
16. The method of item 12 wherein the ads are audio.
17. The method of item 12 wherein the effectiveness of the presented ads is measured by consumer engagement.
18. The method of item 17 wherein engagement is by clicking.
19. The method of item 17 wherein engagement is by a natural language expression interpreted as expressing interest.

## Claims

1. A system for applying artificial intelligence to enhance the effectiveness of media, the system comprising:
a discriminator (14) trained (13) on previously generated media labeled in accordance with a measured effectiveness (64, 65), wherein the previously generated media was presented to users and user engagement with the previously generated media was measured (12);
an information decoder (17) configured to consume newly generated media and information describing the newly generated media, decode a description of the newly generated media, and compare the decoded description to the consumed input information to produce a label (15) for the previously generated media; and
a generator (11) configured to generate the newly generated media according to input information describing the newly generated media, the generator being trained (16) on labeled previously generated media for which decoded information corresponds to input information (74, 75).

2. The system of claim 1 wherein the training uses backpropagation of probability estimates from the discriminator.

3. The system of claim 1 or 2 wherein the generated media is one or more of audible, spoken, graphic, textual, animated, and physically moving media.

4. The system of any of claims 1-3 wherein user engagement is measured by clicking.

5. The system of any of claims 1-3 wherein user engagement is measured by receiving, at a natural language processor, a user natural language expression from the user interpreted as expressing interest.

6. The system of any preceding claim wherein the information comprises user profile information.

7. A computer-implemented method of applying artificial intelligence to enhance the effectiveness of media, the method comprising:
labeling (15), by a discriminator (14) trained (13) on previously generated media, the previously generated media in accordance with a measured effectiveness, wherein the previously generated media was presented to users and user engagement with the previously generated media was measured (12);
consuming, at an information decoder (17), newly generated media and information describing the newly generated media;
decoding, by the information decoder, a description of the newly generated media;
comparing, by the information decoder, the decoded description to the consumed information to produce a label for the newly generated media; and
generating newly generated media, according to the information describing the media, using a generator (11), wherein the generator is trained (16) on labeled media (74, 75) for which decoded information corresponds to input information.

8. The method of claim 7 wherein the training uses backpropagation of probability estimates from the discriminator.

9. The method of claim 7 or 8 wherein the generated media is one or more of audible, spoken, graphic, textual, animated, and physically moving media.

10. The method of any of claims 7-9 wherein user engagement is measured by clicking.

11. The method of any of claims 7-9 wherein user engagement is measured by received a user natural language expression interpreted, by a natural language processor, as expressing interest.

12. The method of any preceding claim wherein the information comprises user profile information.
